# DEMANDE DE BREVET EUROPEEN

(11) **EP 1 103 336 A1**
(43) Date de publication de la demande: **30.05.2001**
(21) Numéro de dépôt: 00403130.8
(22) Date de dépôt: 10.11.2000
(51) Int. Cl.: B23K 26/14

(54) **Système de soudage par faisceau à haute densité d'énergie**

(30) Priorité: 29.11.1999 FR 9915028
(71) Demandeur: Renault, 92100 Boulogne Billancourt (FR)
(72) Inventeur: Boule, Jérôme, 92240 Malakoff (FR); Dujardin, Gauthier, 78180 Montigny le Bretonneux (FR)

(57) **Abrégé**

Système (10) de soudage par faisceau à haute densité d'énergie de pièces métalliques (11) comprenant un corps (13), contenant des moyens de focalisation pour focaliser le faisceau à haute densité d'énergie sur une zone à souder des pièces métalliques (11), sur lequel sont rapportés des moyens de protection (15) adaptés pour créer une lame d'air entre les moyens de focalisation et la zone à souder, et comprenant, en outre, des moyens d'apport (17,20,21) de gaz dans la zone à souder, caractérisé en ce que les moyens d'apports (17,20,21) de gaz comprennent au moins un conduit d'alimentation (21) de gaz, au moins un embout (20) remplaçable d'apport de gaz, ledit embout (20) présentant une extrémité libre par laquelle sont émis les gaz vers la zone à souder, et un support (17) recevant l'extrémité de l'embout (20), opposée à l'extrémité libre de l'embout (20), et une extrémité dudit conduit (21), ledit support (17) comportant au moins un passage (28) faisant communiquer les extrémités de l'embout (20) et du conduit (21) reliées au support (17).

## Description

La présente invention se rapporte au domaine technique des systèmes de soudage par faisceau à haute densité d'énergie.

Les systèmes de soudage par faisceau à haute densité d'énergie peuvent, par exemple, être utilisés pour la confection de pièces en tôle à partir de deux ou plusieurs éléments que l'on soude bord à bord.

De tels systèmes possèdent habituellement une tête, dite tête de focalisation, qui comporte des moyens pour assurer la focalisation du faisceau à haute densité d'énergie sur le point de soudure. Dans le cas où le faisceau à haute densité d'énergie est un laser, les moyens de focalisation peuvent consister en un miroir parabolique. L'état de surface de ce miroir conditionne en grande partie la qualité de focalisation du faisceau. En particulier, celui-ci doit être protégé contre les remontées de vapeurs, de plasma et de projections issus du soudage des tôles.

Pour ce faire, la tête de focalisation comporte habituellement une buse tronconique de protection, placée sous le miroir parabolique, et dont l'extrémité de petit diamètre est située à proximité de la zone à souder. Afin de limiter encore davantage la remontée de vapeurs, plasma ou projections, il est possible d'injecter un gaz sous pression selon l'axe de la buse qui créera une surpression à son extrémité de petit diamètre.

Le soudage de certaines tôles nécessite le plus souvent l'apport d'un gaz, dit gaz de soudage, pour faciliter la création d'un cordon de soudure présentant des qualités optimales. Il peut s'agir, par exemple, d'argon pour des tôles en acier, ou d'hélium, pour tôles d'acier galvanisées.

Lorsque la tête de focalisation comporte une buse de protection, l'apport du gaz de soudage est réalisé par un ou plusieurs conduits fixés sur la buse. L'extrémité de la buse étant située à proximité de la zone de soudage, le ou les conduits d'apport de gaz de soudage doivent eux-mêmes déboucher à proximité de cette zone. L'inclinaison de l'extrémité du ou des conduits, leur diamètre, et leur position par rapport à la zone de soudage sont déterminés de façon à ce que la répartition du gaz de soudage permette l'obtention d'une zone de soudage de qualités optimales.

La tête de focalisation décrite précédemment présente, étant sa proximité avec la zone de soudage, le principal inconvénient de fondre au moindre dérèglement de l'opération de soudage.

Pour remédier à ce problème, il est possible de remplacer la buse de protection par un système émettant une lame d'air à des vitesses supersoniques, la lame d'air étant sensiblement transversale à l'axe du faisceau à haute densité d'énergie. De tels systèmes sont appelés systèmes cross-jet. Cette lame d'air assure la protection du miroir parabolique en déviant les vapeurs, particules, et émissions issues des tôles lors de l'opération de soudage. Un tel système peut être placé, par rapport à la zone de soudage, à une distance supérieure que ne le serait l'extrémité d'une buse de protection. Il est alors possible d'éviter des dégradations du système lors d'un dérèglement de l'opération de soudage.

Néanmoins apparaît alors la difficulté de l'apport du gaz de soudage. En effet, le ou les conduits d'apport de gaz sont généralement maintenus par rapport au système cross-jet par des oreilles venant enserrer le ou les conduits, dont les extrémités débouchent près de la zone de soudage. Le ou les conduits sont disposés pour que la position et l'orientation de leur extrémité soient adéquates. Là encore, au moindre dérèglement de l'opération de soudage, l'extrémité du ou des conduits tend à fondre ce qui nécessite le remplacement du ou des conduits et à nouveau le réglage de la position et de l'orientation du ou des conduits. De telles opérations de maintenance entraînent des coûts et des pertes de temps qui sont incompatibles avec une utilisation industrielle des systèmes de soudage par faisceau à haute densité d'énergie.

La présente invention vise à obtenir un système de soudage par haute densité d'énergie comportant un système de protection du type cross-jet, et des moyens d'apport de gaz de soudage et permettant un remplacement et un réglage facile du ou des moyens d'apport de gaz de soudage.

Dans ce but, elle propose un système de soudage par faisceau à haute densité d'énergie de pièces métalliques comprenant un corps, contenant des moyens de focalisation pour focaliser le faisceau à haute densité d'énergie sur une zone à souder des pièces métalliques, sur lequel sont rapportés des moyens de protection adaptés pour créer une lame d'air entre les moyens de focalisation et la zone à souder, et comprenant, en outre, des moyens d'apport de gaz dans la zone à souder, caractérisé en ce que les moyens d'apports de gaz comprennent au moins un conduit d'alimentation de gaz, au moins un embout remplaçable d'apport de gaz, ledit embout présentant une extrémité libre par laquelle sont émis les gaz vers la zone à souder, et un support recevant l'extrémité de l'embout, opposée à l'extrémité libre, et une extrémité dudit conduit, ledit support comportant au moins un passage faisant communiquer les extrémités de l'embout et du conduit reliées au support.

Selon une autre caractéristique de l'invention, les moyens de protection sont fixés sur le corps par l'intermédiaire d'une fenêtre de déviation conformée pour faciliter l'écoulement de la lame d'air.

Selon une autre caractéristique de l'invention, la fenêtre de déviation présente une section droite sensiblement en forme de U, l'ouverture du U étant orientée dans le sens de l'écoulement de la lame d'air.

Selon une autre caractéristique de l'invention, le support comporte un premier élément recevant l'extrémité de l'embout, opposée à son extrémité libre, et l'extrémité du conduit, et un deuxième élément de liaison reliant le premier élément au corps.

Selon une autre caractéristique de l'invention, le premier élément présente au moins deux faces planes, le deuxième élément comportant deux bras, chaque bras étant respectivement fixé sur l'une des faces, l'extrémité opposée étant reliée au corps.

Selon une autre caractéristique de l'invention, l'orientation du support par rapport au corps détermine la distance séparant l'extrémité libre de l'embout des pièces à souder.

Selon une autre caractéristique de l'invention, l'orientation du support par rapport au corps détermine l'angle d'émission des gaz par l'extrémité de l'embout par rapport aux pièces à souder.

Selon une autre caractéristique de l'invention, le premier élément comporte un évidement recevant au moins une partie de l'extrémité libre de l'embout.

Selon une autre caractéristique de l'invention, l'évidement est cylindrique.

Selon une autre caractéristique de l'invention, l'embout est tubulaire.

D'autres caractéristiques et avantages de l'invention apparaîtront à la lecture de la description qui va suivre en référence aux dessins dans lesquels :
- la figure 1 représente schématiquement une vue de côté de la tête d'un système de soudage par faisceau à haute densité d'énergie selon l'invention,
- la figure 2 représente la coupe II-II de la figure 1,
- la figure 3 représente la coupe III-III d'un élément de la figure 1.

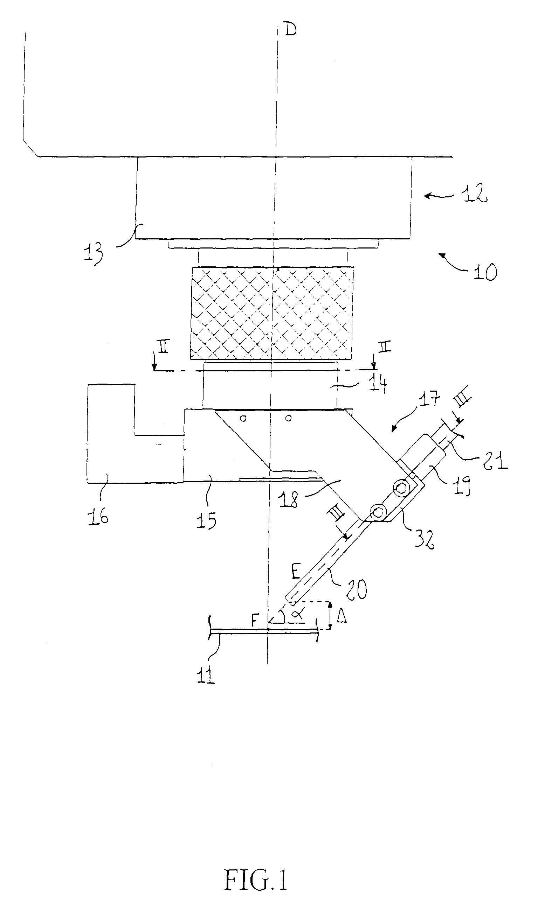

Le système de soudage par faisceau à haute densité d'énergie 10, dont la tête 12 est représentée sur la figure 1, est destiné à souder des pièces métalliques 11, par exemple des tôles. Le système de soudage 10 comporte des moyens (non représentés) de génération d'un faisceau à haute densité d'énergie, par exemple, un faisceau laser. Il comporte des moyens de transports dudit faisceau pour le faire parvenir jusqu'à la tête 12. La tête 12 se compose d'un corps 13 comportant des moyens de focalisation (non représentés), destinés à focaliser le faisceau à haute densité d'énergie, selon un axe D, en un point de focalisation F. Dans le cas d'un faisceau laser, les moyens de focalisation peuvent consister en un miroir parabolique.

Il existe deux familles de systèmes de soudage par faisceau à haute densité d'énergie. Dans la première, les pièces à souder sont fixes et la tête se déplace avec le faisceau le long de la zone à souder. Dans la seconde, la tête et le faisceau sont fixes, les pièces à souder venant se déplacer par rapport à ceux-ci.

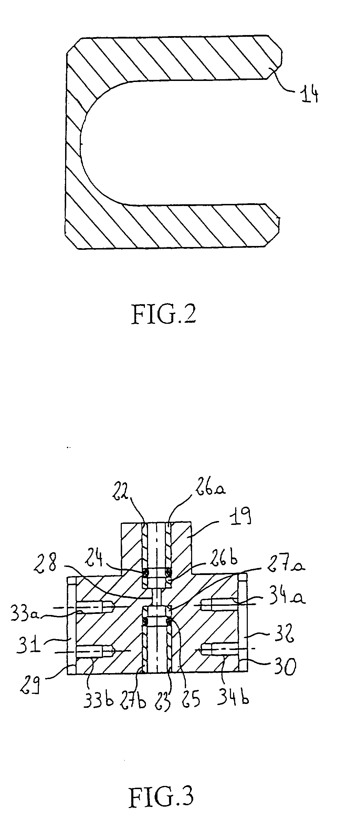

Sur le corps 13 est fixée une fenêtre de déviation 14, dont la section droite, représentée sur la figure 2, est celle d'un U.

Des moyens 15 de génération d'une lame d'air sont montés sur la fenêtre de déviation 14. Ces moyens 15 génèrent une lame d'air à des vitesses supersoniques, dont le plan moyen est sensiblement perpendiculaire à l'axe D. De tels moyens 15 sont connus de l'homme du métier et ne seront pas décrits par la suite. Une conduite 16 d'alimentation d'air vient approvisionner les moyens 15 de génération de la lame d'air.

La fenêtre de déviation 14 est orientée de façon à ce que l'ouverture du U soit dans le sens de l'écoulement de la lame d'air engendrée par les moyens 15 de génération de lame d'air. La hauteur de la fenêtre de déviation 14 est fonction des caractéristiques de la lame d'air engendrée par les moyens 15 de génération de lame d'air. Typiquement elle est de l'ordre d'une quinzaine de millimètres.

Un support 17 est fixé sur les moyens 15 de génération de la lame d'air. Le support 17 se compose d'un premier élément 19, dont la section est représentée à la figure 3. Un second élément 18 relie le premier élément 19 aux moyens 15 de génération de la lame d'air. Le second élément 18 se compose de deux bras plans présentant chacun la forme d'un V. Chaque bras peut être fixé sur les moyens 15 de génération de la lame d'air par vissage.

Le premier élément 19 présente une section en forme de T. Il comporte, à l'extrémité du pied du T, un premier évidement 22 destiné à recevoir l'extrémité d'un conduit 21 d'alimentation d'un gaz de soudage, par exemple, de l'argon ou de l'hélium, ou un mélange des deux. De préférence, le conduit d'alimentation 21 comme le premier évidement 22 sont cylindriques. Le premier évidement 22 peut contenir, pour le blocage du conduit d'alimentation 21, un premier joint torique 24, maintenu dans le premier évidemment 22 au moyen de premier et second tubes de fixation 26a,26b, montés serrés dans le premier évidemment 22.

Le premier élément 19 comporte, en partie médiane de la barre du T, un deuxième évidemment 23, destiné à recevoir l'extrémité d'un embout creux 20. De préférence, l'embout creux 20 à une forme tubulaire, de diamètre intérieur φ, et le deuxième évidemment 23 est cylindrique. Le deuxième évidement 23 peut contenir, pour le blocage de l'embout 20, un deuxième joint torique 25, maintenu dans le deuxième évidemment 23 au moyen de troisième et quatrième tubes de fixation 27a,27b, montés serrés dans le deuxième évidemment 23.

L'embout 20 défini un axe moyen E de soufflage des gaz de soudage.

Un passage 28 cylindrique relie les premier et deuxième évidements 22,23.

Sur chaque face, respectivement 29,30, des extrémités opposées de la barre du T du premier élément 19, se projette en saillie une paroi de positionnement, respectivement 31,32. Les deux bras formant le deuxième élément 18 viennent respectivement en appui sur les faces 29,30, et en butée contre les parois de positionnement 31,32.

Chaque face 29,30 comporte deux alésages, respectivement 33a,33b et 34a,34b, destinés à recevoir des vis pour la fixation des bras du deuxième élément 18 sur le premier élément 19.

Les positions des bras du deuxième élément 18 par rapport aux moyens 15 de génération de la lame d'air, et du premier élément 19 par rapport au deuxième élément 18, déterminent l'angle α formé par l'extrémité libre de l'embout tubulaire 20, soit l'axe E, par rapport au plan moyen des pièces à souder 11.

De préférence, l'angle α est tel que l'axe moyen E de soufflage des gaz coupe l'axe D environ deux millimètres au-dessus du point de focalisation F. La longueur de l'embout 20 détermine alors la distance Δ séparant l'extrémité libre de l'embout 20 des pièces à souder 11.

L'angle α, la distance Δ, et le diamètre φ sont les paramètres principaux de contrôle de l'apport du gaz de soudage au niveau de la zone à souder des pièces 11. Pour obtenir, un apport de gaz présentant des propriétés optimales pour l'opération de soudage, la valeur de l'angle α est de préférence de l'ordre 40 degrés, celle de la distance Δ de l'ordre d'une dizaine de millimètres, et celle du diamètre φ de l'ordre de 4 millimètres.

L'embout 20 peut être changé indépendamment du support 17 ou du conduit 21 d'alimentation du gaz de soudage. De plus, le support 17 étant monté sur les moyens 15 de génération de lame d'air, la mise en place d'un embout 20, dans le premier élément 19 du support 17, fixe l'angle α, et la distance Δ, sans qu'il y ait d'opération de réglages supplémentaires à réaliser.

La fenêtre de déviation 14 a essentiellement pour rôle de faciliter le passage de la lame d'air engendrée par les moyens 15 de génération de lame d'air. En effet, lorsque ceux-ci sont trop proches du corps 13 de la tête 12 du système 10 de soudage par faisceau à haute densité d'énergie, la lame d'air provoque un sifflement strident qui peut s'avérer être incompatible avec les normes en terme de nuisances sonores. La fenêtre de déviation 14 permet d'atténuer le sifflement provoqué par la lame d'air.

La présente invention présente l'avantage de simplifier les opérations de maintenance d'un système de soudage par faisceau à haute densité d'énergie, puisque l'embout peut être facilement remplacé, dans le cas où, par exemple, il viendrait à fondre lors d'un dérèglement de l'opération de soudage. Le remplacement ne nécessite pas des réglages spécifiques ce qui représentent un gain de temps et de coût essentiels pour une utilisation industrielle d'un système de soudage par faisceau à haute densité d'énergie.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Système (10) de soudage par faisceau à haute densité d'énergie de pièces métalliques (11) comprenant un corps (13), contenant des moyens de focalisation pour focaliser le faisceau à haute densité d'énergie sur une zone à souder des pièces métalliques (11), sur lequel sont rapportés des moyens de protection (15) adaptés pour créer une lame d'air entre les moyens de focalisation et la zone à souder, et comprenant, en outre, des moyens d'apport (17,20,21) de gaz dans la zone à souder, caractérisé en ce que les moyens d'apports (17,20,21) de gaz comprennent au moins un conduit d'alimentation (21) de gaz, au moins un embout (20) remplaçable d'apport de gaz, ledit embout (20) présentant une extrémité libre par laquelle sont émis les gaz vers la zone à souder, et un support (17) recevant l'extrémité de l'embout (20), opposée à l'extrémité libre de l'embout (20), et une extrémité dudit conduit (21), ledit support (17) comportant au moins un passage (28) faisant communiquer les extrémités de l'embout (20) et du conduit (21) reliées au support (17).

2. Système (10) selon la revendication 1, caractérisé en ce que les moyens de protection (15) sont fixés sur le corps (13) par l'intermédiaire d'une fenêtre de déviation (14) conformée pour faciliter l'écoulement de la lame d'air.

3. Système (10) selon les revendications 1 ou 2, caractérisé en ce que la fenêtre de déviation (14) présente une section droite sensiblement en forme de U, l'ouverture du U étant orientée dans le sens de l'écoulement de la lame d'air.

4. Système (10) selon l'une des revendications 1 à 3, caractérisé en ce que l'orientation du support (17) par rapport au corps (13) détermine la distance (Δ) séparant l'extrémité libre de l'embout (20) des pièces à souder (11).

5. Système (10) selon l'une des revendications 1 à 4, caractérisé en ce que l'orientation du support (17) par rapport au corps (13) détermine l'angle (a) d'émission des gaz par l'extrémité libre de l'embout (20) par rapport aux pièces à souder (11).

6. Système (10) selon l'une des revendications 1 à 5, caractérisé en ce que le support (17) comporte un premier élément (19) recevant l'extrémité de l'embout (20), opposée à son extrémité libre, et l'extrémité du conduit (21), et un deuxième élément de liaison (18) reliant le premier élément (19) au corps (13).

7. Système (10) selon la revendication 6, caractérisé en ce que le premier élément (19) présente au moins deux faces (29,30) planes, le deuxième élément (18) comportant deux bras, chaque bras étant respectivement fixé sur l'une des faces (29,30), l'extrémité opposée étant reliée au corps (13).

8. Système (10) selon les revendications 6 ou 7, caractérisé en ce que le premier élément (19) comporte un évidement (23) recevant au moins une partie de l'extrémité libre de l'embout (20).

9. Système (10) selon la revendication 8, caractérisé en ce que l'évidement (23) est cylindrique.

10. Système selon l'une des revendications 1 à 9, caractérisé en ce que l'embout (20) est tubulaire.
